(19) Europäisches Patentamt

European Patent Office

Office européen des brevets

(11) **EP 1 725 049 A1**

(12) **EUROPEAN PATENT APPLICATION**

(43) Date of publication:
**22.11.2006 Bulletin 2006/47**

(51) Int Cl.:
*H04N 7/50* (2006.01)

(21) Application number: **06113859.0**

(22) Date of filing: **12.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.05.2005 JP 2005145069**

(71) Applicant: **NEC Electronics Corporation Kawasaki, Kanagawa 211-8668 (JP)**

(72) Inventor: **Kamataki, Yukako**
**c/o NEC Micro Systems, Ltd.**
**Kawasaki-shi**
**Kanagawa (JP)**

(74) Representative: **Betten & Resch**
**Patentanwälte,**
**Theatinerstrasse 8**
**80333 München (DE)**

(54) **Information processing apparatus and method**

(57)    An information processing apparatus according to an embodiment of the invention includes: a stream analyzing unit; a dividing unit; and a picture inserting unit. The analyzing unit detects a division boundary along which a dividing-target GOP including one GOP is divided into a predetermined number of GOPs or less. The dividing unit generates insertion-target pictures based on core pictures among pictures from the first picture to the division boundary in the dividing-target GOP. The insertion-target pictures are obtained by recoding the last core picture, and the last-but-one core picture into an I picture. The picture inserting unit inserts the insertion-target pictures into a divided picture group including one or more pictures obtained by dividing the dividing-target GOP along the division boundary. Thus, the divided GOP is generated.

Fig. 1

**Description**

BACKGROUND OF THE INVENTION

1. Field of the Invention

The present invention relates to an information processing apparatus and an information processing method for reproducing an image based on digital video data. In particular, the invention relates to an information processing apparatus and an information processing method for realizing a special playback mode in accordance with an MPEG (Moving Picture Experts Group) system.

2. Description of Related Art

Along with recent developments in digital technologies, a digital audio/video reproducing apparatus such as an HD (Hard Disc) or DVD (Digital Versatile Disc) recorder, or a DVD player has been put into practical use. In such a digital system, image data is compressed into a stream based on an MPEG system. The digital reproducing apparatus is required to have a special playback function such as a reverse playback function in addition to a normal reproducing function as in an analog VTR (video tape recorder) . The MPEG standards do not lay down a strict rule for all items, but a processing system capable of special playback of any stream compressed in accordance with the MPEG system is required.

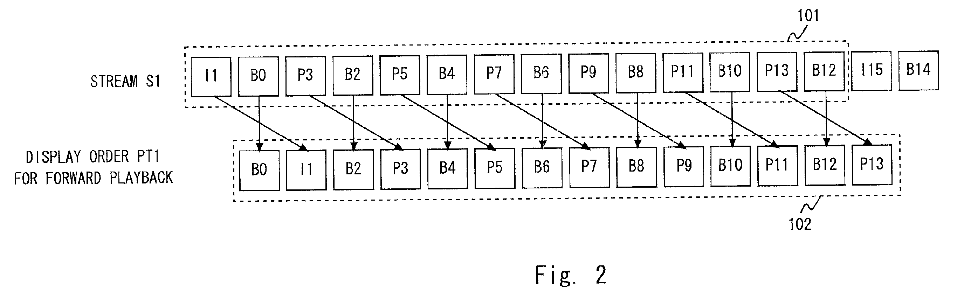

Fig. 2 shows a GOP (Group of Picture) including 14 pictures. A stream S1 is assumed to have the 14 pictures from an I picture (Intra coded Picture) to a picture preceding the next I picture. The stream from the I picture to the picture preceding the next I picture is referred to as "GOP". The GOP includes I pictures and besides, P pictures (Predictive coded Picture) and B pictures (Bidirectionally predictive coded Picture).

The I pictures are obtained through intra-frame coding. That is, the I pictures are obtained without executing predictive coding based on a previous picture, that is, obtained through intra-picture coding without referencing other pictures. The I picture is a picture including all information necessary for decoding, which can be decoded without using other picture information. The P picture is obtained through intra predictive coding with reference to a previous I picture or P picture. Therefore, the P picture requires information about the decoded I picture or P picture preceding the target P picture in the stream. The B picture is obtained through bidirectionally predictive coding using two pictures. The B picture is coded by interpolating between a previous and a future I or P-picture. This process is called bi-directional prediction.

In Fig. 2, S1 denotes the sequence of pictures in the stream, and PT1 denotes the order in which the pictures are displayed upon the forward playback. In Fig. 2, letters I, P, and B of symbols I1, B0, and P3 refer to an I picture, a P picture, and a B picture, respectively, and numeric characters of these symbols refer to numbers given to the pictures in the display order upon the forward playback. Numbering starts with 0. For example, "I1" stands for a first I picture in the display order, "B0" stands for a $0^{th}$ B picture in the display order, and "P3" stands for a third P picture in the display order. Here, in the case of reverse-playback, pictures are decoded and displayed in the order reverse to the display order for the forward playback. That is, the pictures of the stream S1 are decoded and displayed from the last picture P13 in the display order PT1 for the forward playback toward the first picture B0.

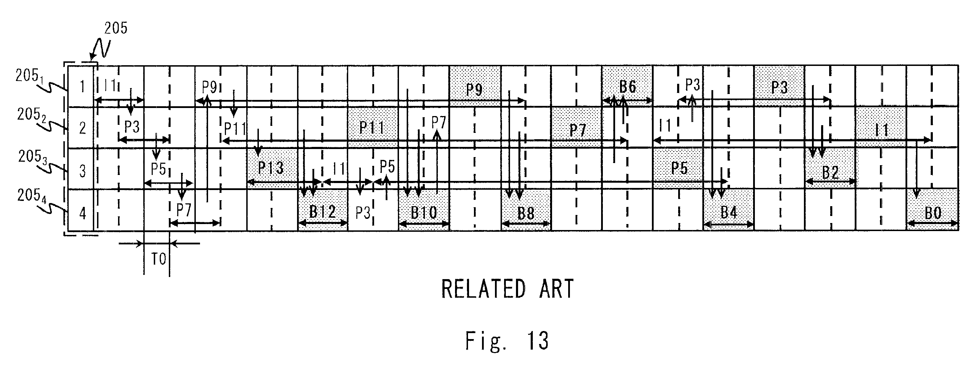

There has been hitherto known a method of reverse-playing such an MPEG video stream by decoding all pictures in a GOP of the stream (see Japanese Patent Translation Publication No. 2003-515290, for example). Fig. 13 illustrates a conventional technique for reverse playback by use of a decoding buffer corresponding to 4 pictures, and shows how the conventional decoding buffer is used, and decoding and display timings.

In Fig. 13, reference numeral 205 denotes a decoding buffer for storing a decoded picture. In the illustrated example, decoding buffers $205_1$ to $205_4$ are prepared as the decoding buffer corresponding to 4 pictures (picture storage area). Numerical subscripts of 205 refer to the chronological order in which pictures are stored in each of the decoding buffers $205_1$ to $205_4$; the horizontal direction (widthwise direction of Fig. 13) corresponds to the time axis. Here, T0 denotes a picture field holding period, and a shaded period is a display period of each picture. Further, the horizontal axis indicates a decoding timing for each picture and a period during which each picture is stored in the decoding buffer. The vertical direction (length direction of Fig. 13) indicates a core picture necessary for decoding (I picture and P picture).

First, only core pictures out of the 14 pictures from the picture I1 to picture B12 constituting the GOP of Fig. 2 are overwritten and stored into the picture storage areas of the decoding buffers $205_1$ to $205_4$ at timings of Fig. 13. An unillustrated decoding unit decodes the core pictures based on the above. That is, the picture I1 is decoded and stored in the decoding buffer $205_1$, and the picture P3 is decoded based on information about the picture I1 and stored in the decoding buffer $205_2$. Then, the picture P5 is decoded based on information about the picture P3 and stored in the decoding buffer $205_3$. The above processing is repeated to decode the picture P13 based on information about the picture P11 and store the decoded pictured in the decoding buffer $205_3$. Upon the completion of decoding up to the picture P13, an empty decoding buffer of the decoding buffers $205_1$ to $205_4$ is used to sequentially decode the B pictures from the picture B12 in the decode order for reverse playback, and to display the pictures in the display order for reverse playback.

At the time of displaying the pictures in the display order for reverse playback, the picture P13 to be displayed first has been already decoded, so the picture P13 is directly displayed. Next, the picture B12 is decoded based on information about the picture P11 and the picture P13, and stored in the decoding buffer $205_4$ and then displayed. Subsequently, since the picture P11 has been already decoded, the picture P11 is displayed. The core pictures (I1, P3, P5, P7, and P9) out of the pictures from the picture I1 to the picture P7 are decoded and temporarily stored in the decoding buffer $205_1$ to $205_4$ but are overwritten. Thus, these pictures should be decoded again. The reverse playback is performed while redecoding the core pictures at a predetermined timing when any of the decoding buffer $205_1$ to $205_4$ is empty.

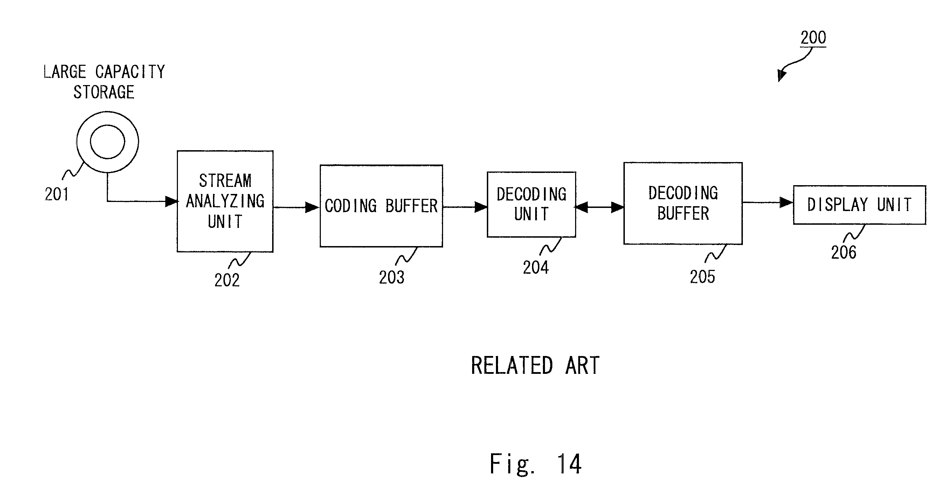

Fig. 14 is a block diagram showing a conventional image processing system. A conventional image processing system 200 for executing reverse playback using a method of Fig. 13 includes, as shown in Fig. 14, a large capacity storage 201 such as a DVD or an HDD, a stream analyzing unit 202, a coding buffer 203, a decoding unit 204, a decoding buffer 205, and a display unit 206. The stream analyzing unit 202 clips image or audio data. The coding buffer 203 stores pre-decoding image data. The decoding unit 204 decodes MPEG-compressed image data. The decoding buffer 205 stores decoded picture data. The display unit 206 displays the decoded picture data on a monitor.

The stream analyzing unit 202 extracts only image data from a stream read from the large capacity storage 201, and the extracted data is stored in the coding buffer 203. The image data stored in the coding buffer 203 is decoded by the decoding unit 204 at decoding timings of Fig. 13. The decoded picture is stored in the picture storage areas ($205_1$ to $205_4$) of the decoding buffer 205 of Fig. 2 and displayed by the display unit 206.

However, a variety of formats have been recently used as a stream format, such as a DVD or VideoCD, or AVI (Audio, Video, still Images) file including audio data, video data, and still images. In addition, restrictions on the stream configuration are not applicable to every format. Thus, it is impossible to determine an upper limit of the number of pictures in 1 GOP, which is most important for special playback such as reverse playback.

According to the method of Fig. 13, which involves plural decoding processes by use of the decoding buffer corresponding to 4 pictures, it is necessary to retransfer necessary image data from the large capacity storage 201 to the coding buffer 203 or to store all pre-decoding image data corresponding to 1 GOP in the coding buffer 203. With the method of retransferring necessary image data from the large capacity storage 201 to the coding buffer 203, the coding buffer 203 can be made compact, but the numbers of times data is transferred from the large capacity storage 201 and a position for reading data from the large capacity storage 201 is changed are increased. As a result., it takes longer time to access. In addition, since the upper limit of the number of pictures in 1 GOP cannot be determined, the optimum decoding and retransfer timings should be determined based on the number of pictures in 1 GOP and the array of the pictures. With the method of storing the image data corresponding to 1 GOP in the coding buffer 203, the upper limit of the number of pictures corresponding to 1 GOP is not determined, it is impossible to ensure that every stream is played back in reverse.

That is, in either the case of retransferring the necessary image data from the large capacity storage 201 or the case of storing the image data corresponding to 1 GOP in the coding buffer 203, with the conventional reverse playback method of Fig. 13, as the number of pictures in 1 GOP increases, the number of redecoding processes increases. Further, at the time of redecoding, the pictures should be redecoded from the first I picture in the GOP. This causes a problem in that pictures cannot be efficiently decoded.

SUMMARY OF THE INVENTION

According to an aspect of the present invention, an information processing apparatus capable of reproducing video information, includes: an analyzing unit for detecting a division boundary along which a dividing-target GOP including one or more GOPs is divided into a plurality of GOPs as divided GOPs; a dividing unit for generating an insertion-target picture based on a picture of a specific type among pictures from the first picture to the division boundary in the dividing-target GOP; and a picture inserting unit for inserting insertion information about the insertion-target picture into a divided picture group including one or more pictures obtained by dividing the dividing-target GOP along the division boundary, which is transferred from the analyzing unit.

According to another aspect of the invention, an information processing method for reproducing video information, includes: detecting a division boundary along which a dividing-target GOP including one or more GOPs is divided into a plurality of GOPs as divided GOPs; generating an insertion-target picture based on a picture of a specific type among pictures from the first picture to the division boundary in the dividing-target GOP; and generating the divided GOP based on insertion information about the insertion-target picture and a divided picture group including one or more pictures obtained by dividing the dividing-target GOP along the division boundary.

According to the present invention, an insertion-target picture is generated using specific pictures preceding the division boundary, an insertion-target picture or information about an insertion-target picture is inserted as insertion information to the divided picture group. Thus, the dividing-target GOP can be divided into a divided GOP as a new GOP. Hence, a divided GOP including a predetermined number of pictures or less can be used as a unit of decoding processing. Thus, if the number of pictures in a GOP of the original stream is large, for example, the GOP may be divided to reduce the number of pictures per GOP. Accordingly, it is possible to eliminate limitations on the number of pictures of the stream in the unit of the decoding process which can be played back in reverse. Further, even if the size of the decoding buffer is reduced, the number of redecoding processes for reverse playback can be reduced, and the decoding efficiency is improved.

According to the present invention, it is possible to provide an information processing apparatus and an information processing method capable of reducing the number of redecoding processes during reverse playback even in the case of downsizing a decoding buffer with no restriction on the number of pictures corresponding to 1 GOP of a stream that can be played back in reverse, and capable of efficient decoding.

BRIEF DESCRIPTION OF THE DRAWINGS

The above and other objects, advantages and features of the present invention will be more apparent from the following description taken in conjunction with the accompanying drawings, in which:

Fig. 1 is a block diagram showing an information processing apparatus according to a first embodiment of the present invention;
Fig. 2 illustrates a GOP including 14 pictures;
Fig. 3 is a schematic diagram showing a dividing-target GOP including 14 pictures, a divided GOP including 10 pictures, and a divided GOP including 6 pictures;
Fig. 4 is a schematic diagram showing a GOP including 30 pictures, and a divided GOP obtained by dividing the GOP;
Fig. 5 is a flowchart of an information processing method according to the first embodiment of the present invention;
Fig. 6 shows a decoding timing and a display timing for a decoded picture in the case of continuously playing back divided two GOPs in reverse using a decoding buffer capable of storing 4 pictures;
Fig. 7 shows a decoding timing and a display timing for a decoded picture in the case of sequentially playing back divided two GOPs in reverse using a decoding buffer capable of storing 4 pictures;
Fig. 8 is a block diagram showing an information processing system according to a modified example of the first embodiment of the invention;
Fig. 9 shows a GOP including a sequence of B pictures and a divided GOP obtained by dividing the GOP;
Fig. 10 is a block diagram showing an information processing system according to a second embodiment of the present invention;
Fig. 11 shows a divided GOP that is divided by the information processing apparatus according to the second embodiment of the invention;
Fig. 12 shows a dividing-target GOP and a divided GOP according to a third embodiment of the present invention;
Fig. 13 illustrates a conventional technique for reverse playback by use of a decoding buffer corresponding to 4 pictures, and shows how the conventional decoding buffer is used, and decoding and display timings; and
Fig. 14 is a block diagram showing a conventional information processing apparatus.

DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposed.

First Embodiment

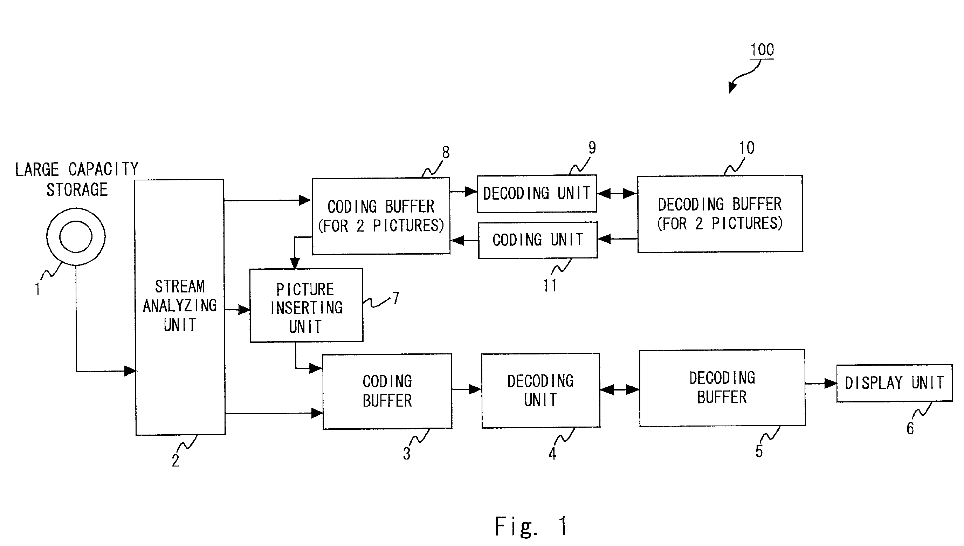

Hereinafter, embodiments of the present invention are described in detail with reference to the accompanying drawings. Fig. 1 is a block diagram showing an information processing apparatus according to a first embodiment of the present invention. As shown in Fig. 1, an information processing apparatus 100 includes a large capacity storage 1 such as a DVD or an HDD, a stream analyzing unit 2, a coding buffer 3, a decoding processing unit including a decoding unit 4 and a decoding buffer 5, and a display unit 6.

The stream analyzing unit 2 separate image or audio data. The coding buffer 3 stores pre-decoding image data. The decoding unit 4 decodes MPEG-compressed image data. The decoding buffer 5 stores decoded picture data. The display unit 6 displays the decoded picture data on a monitor.

The large capacity storage 1 is assumed to store so-called multimedia information. The multimedia information includes video information composed of a combination of GOPs (group of pictures) composed of a combination of several types of pictures, that is, a combination of given numbers of I pictures, P pictures, and B pictures with the GOP uses as an access unit.

The stream analyzing unit 2 reads video information from the large capacity storage 1, and the video information is transferred to the coding buffer 3. The video information includes plural GOPs in the MPEG system. The decoding unit 4 determines a type of each picture of the GOP transferred to the coding buffer 3, and generates and supplies a decoded picture to the decoding buffer 5. At this time, for example, P pictures and B pictures are decoded based on decoded pictures in the decoding buffer 5. The decoded pictures supplied to the decoding buffer 5 are displayed (reproduced) on the display unit 6.

Here, the information processing apparatus of this embodiment enables special playback as well as forward playback of a stream including such plural GOPs. In order to improve decoding efficiency during the special playback, the apparatus further includes a picture inserting unit 7 and a dividing unit. The dividing unit includes a coding buffer 8, a decoding processing unit including a decoding unit 9 and a decoding buffer 10, and a coding unit 11.

The coding buffer 8 includes a buffer capable of storing two pictures, and image data transferred from the stream analyzing unit 2 are sequentially overwritten and stored into the coding buffer 8. The decoding unit 9 decodes the image data stored in the coding buffer 8, and the decoding buffer 10 stores the data decoded by the decoding unit 9. The coding unit 11 recodes the data in the decoding buffer 10 to generate I pictures. The I picture coded by the coding unit 11 is overwritten and stored into a buffer area corresponding to 1 picture in the coding buffer 8. The picture inserting unit 7 functions to transfer the I picture in the coding buffer 8 to the coding buffer 3 to thereby insert an I picture to the image data transferred from the stream analyzing unit 2 to the coding buffer 3.

Hereinafter, the information processing apparatus of this embodiment is described in more detail. Fig. 2 illustrates a GOP including 14 pictures, in an NTSC (National Television Standards Committee) stream. The following description is focused on a stream including a GOP 101 composed of 14 pictures from an I picture to a picture preceding the next I picture. In Fig. 2, S1 denotes the sequence of pictures in the stream, and PT1 denotes the order in which the pictures are displayed upon the forward playback. In Fig. 2, letters I, P, and B of symbols I1, B0, and P3 refer to an I picture, a P picture, and a B picture, respectively, and numeric characters of these symbols refer to numbers given to the pictures in the display order upon the forward playback. Numbering starts with 0. For example, "I1" stands for a first I picture in the display order, "B0" stands for a $0^{th}$ B picture in the display order, and "P3" stands for a third P picture in the display order. Here, in the case of reverse-playback, pictures are decoded and displayed in the order reverse to the display order for the forward playback. That is, the pictures of the stream S1 are decoded and displayed from the last picture P13 in the display order PT1 for the forward playback toward the first picture B0.

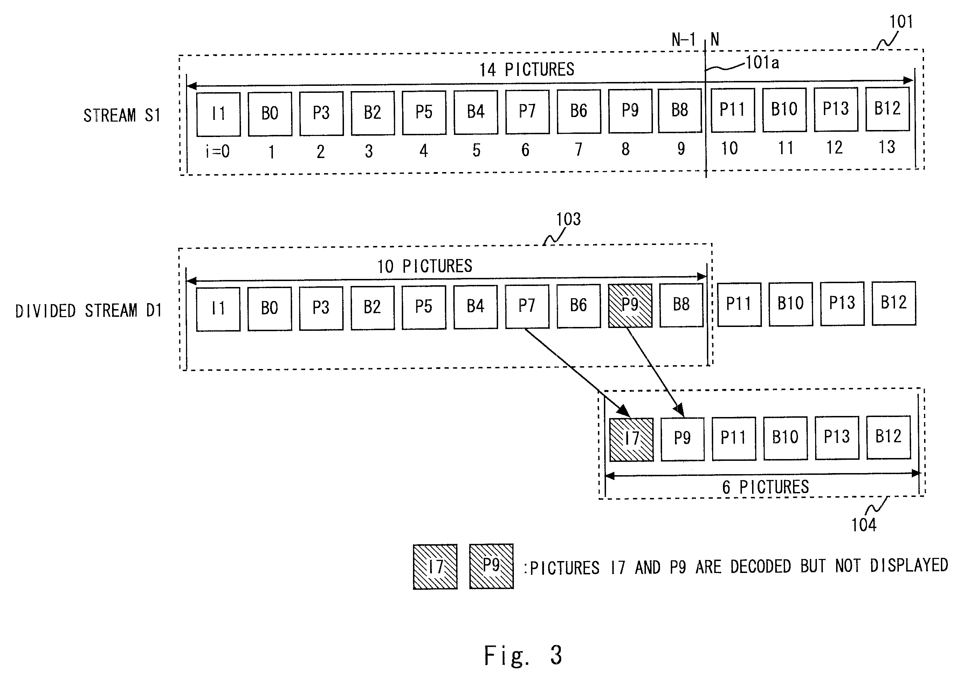

In the information processing apparatus 100 of this embodiment, at least one I picture and another I or P-picture are inserted into a stream to thereby divide one GOP into plural GOPs. With this dividing processing, a decoding efficiency upon the special playback can be improved. Fig. 3 shows an example where the GOP 101 including 14 pictures of the stream of Fig. 2 is divided into a GOP 103 including 10 pictures and a GOP 104 including 6 pictures. Incidentally, this embodiment describes a processing of dividing one GOP into a predetermined number of pictures or less, but a GOP group including plural GOPs (dividing-target picture group) may be divided, into a predetermined number of GOPs or less (hereinafter referred to as "divided GOP").

Since the divided GOP is composed of a predetermined (preset) number of pictures or less, it is possible to determine a buffer capacity or reduce a buffer capacity as compared with a general one, or to improve decoding efficiency as described below.

In the information processing apparatus 100, when a host (not shown) or the like sends a reverse playback instruction, the stream analyzing unit 2 starts a processing for special playback. When the GOP 101 of Fig. 3 is read from the large capacity storage 1, for example, it is determined whether or not the number of pictures in the GOP 101 is larger than a preset number of pictures in the divided GOP. If the number of the pictures is larger, the dividing process is started. Here, the case of dividing the GOP 101 into the divided GOPs 103 and 104 each including 10 pictures or less as indicated by D1 is described. Further, the picture number in the stream S1 of a GOP is hereinafter referred to as S[i]. The picture number S[i] in the stream sequence is correlated with the picture number i in the dividing-target GOP 101. That is, the picture number i of the first picture I1 is set to 0. For example, in Fig. 3, the dividing-target GOP 101 includes pictures numbered S[0] to S[13]; S[i] = S[0] = I1.

The stream analyzing unit 2 generates the divided GOPs 104 and 103. In this case, because of the reverse playback, the unit generates the divided GOPs 104 and 103 in this order. First, a division boundary 101a necessary for obtaining the divided GOP 104 is detected. Provided that the number of pictures in the dividing-target GOP 101 is m (= 14), and the maximum number of pictures in the divided GOP is n (= 10), the number (A + 1) of pictures in the divided GOP is derived from $(((m - n)/(n - 2)) + 1) + 1$ where the number of dividing processes A = $((m - n)/(n - 2)) + 1$ (A is an integer of 0 or larger). Assuming that the division boundary is between an (N-1) th picture and an Nth picture, N = (n + (n - 2) (a - 1)) where a represents a value (variable) calculated by decrementing the number of dividing processes A every process.

In this example, the GOP 101 is divided along the division boundary 101a between the picture B8 and the picture P11, and the first picture in the picture group after the division boundary 101a is a P picture (P11) . Thus, the picture group itself cannot be used as a decoding unit. To that end, the information processing apparatus 100 of this embodiment carries out the following insertion-target picture generating processing (pre-processing) on the picture group to generate at least one I picture, and another I picture or P picture. Then, the pictures are added to the above picture group, whereby the picture group becomes a GOP(divided GOP 104). Incidentally, the insertion-target picture generating processing is carried out at the time of generating a divided GOP other than the last divided GOP.

The stream analyzing unit 2 first calculates N as the insertion-target picture generating processing to detect the division boundary 101a. Then, only I pictures or P pictures (hereinafter referred to as core pictures) as special pictures out of pictures from the first picture to the picture boundary in the GOP 101, that is, pictures numbered S[0] to S[9] are transferred to the coding buffer 8.

The coding buffer 8 of this embodiment has a storage area corresponding to 2 pictures. Incidentally, as described later, the coding buffer 8 needs only to have a storage area corresponding to 1 picture. The coding buffer 8 receives the I pictures and the P pictures in the form of stream S1, which are transferred from the stream analyzing unit 2. There are 5 core pictures, that is, S[0] = I1, S[2] = P3, S[4]= P5, S[6]= P7, and S[8]= P9, before the division boundary 101a of the GOP 101, so these core pictures sequentially transferred are sequentially overwritten to the coding buffer 8. Finally, 2 core pictures, S[6]= P7 and S[8]= P9, are stored.

The decoding unit 9 decodes one of the two core pictures in the stream S1, which is stored first, at a timing when the first two core pictures are stored in the coding buffer 8. That is, at that point in time when the first two core pictures, S[0] = I1 and S[2] = P3, are stored, the picture stored first, S[0] = I1, is decoded and supplied to a decoding buffer 10. The decoding buffer 10 of this embodiment also has a storage area capable of storing 2 decoded pictures.

Next, if the stream analyzing unit 2 transfers the picture, S [4] = P5, to the coding buffer 8, a core picture, S [2] = P3, which is stored prior to the core picture, S[4] = P5, is decoded with reference to the decoded picture in the decoding buffer 10. Then, the decoded picture is transferred to the decoding buffer 10. Thus, by the time the last two core pictures, S [6] = P7 and S [8] = P9, are stored in the coding buffer 8, the two decoded pictures, S[4] = P5 and S[2]= P3, have been stored in the decoding buffer 10.

If one of the core pictures in the coding buffer 3, which is stored first, is not an I picture, the coding unit 11 recodes the core picture to an I picture. In this case, the core picture stored first, S[6]= P7, is a P picture, the decoded P picture P7 stored in the decoding buffer 10 is recoded into an I picture. Then, the recoded picture is used as a new core picture 17, and overwritten to the picture, S[6]= P7, in the coding buffer 8.

As mentioned above, the information processing apparatus 100 of this embodiment inserts at least one I picture, and another I picture or P picture to thereby generate a GOP(divided GOP 104) using divided picture groups. The generation of the divided GOP 104 requires an I picture and a core picture as the insertion-target picture. Through the aforementioned processing of the dividing unit, the insertion-target picture generating processing for generating the divided GOP is completed.

The picture inserting unit 7 transfers the insertion-target picture thus generated, that is, the recoded picture, S [6] = I7, and the core picture, S[8] = I9, which are stored in the coding buffer 8 at a timing designated by the stream analyzing unit 2 to the coding buffer 3. The stream analyzing unit 2 transfers the rest pictures, S[10] to S[13], whereby the coding buffer 3 stores the divided GOP 104. In the following description, one or more pictures that are obtained by dividing a dividing-target GOP along the division boundary 101a and transferred to the coding buffer 8 by the stream analyzing unit 2 are referred to as "divided picture group". In this example, the divided picture group in the divided GOP 104 includes pictures P11, B10, P13, and B12. The stream analyzing unit 2 divides the dividing-target GOP along the division boundary 101a for the reverse playback, and sequentially transfers pictures of the divided picture group to the coding buffer 3 at predetermined timings.

The divided GOP 103 is the last one of divided GOPs derived from the dividing-target GOP 101. Since the GOP includes one or more I pictures and core pictures, the above processing for the last divided GOP can be omitted. That is, the divided picture group composed of the pictures, S[0] = I1 to S[9] = B8, may be directly transferred to the coding buffer 3.

The divided GOP stored in the coding buffer 3 is decoded and played back in reverse in the same fashion as the conventional one. That is, the GOP is decoded by the decoding unit 4 at a predetermined timing, stored in the decoding buffer 5, and displayed on the display unit 6. Incidentally, a decoding processing necessary for the coding buffer 3 to play back the divided GOP in reverse is described below.

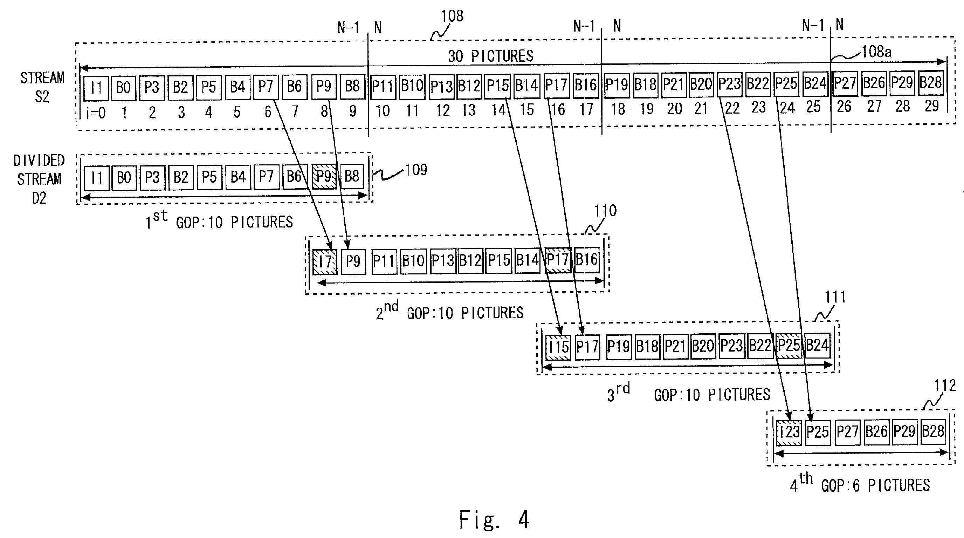

Fig. 4 shows a stream S2 having a GOP composed of 30 pictures, and a stream D2 obtained by dividing the stream S2 by the information processing apparatus 100 of this embodiment. A GOP 108 having 30 pictures is a dividing-target GOP, and GOPs 109 to 112 are divided GOPs. Similar to the above, in the illustrated example, the maximum number of divided GOPs (maximum GOP) n = 10. That is, the dividing-target GOP 108 including 30 pictures is divided into the divided GOP 109, the divided GOP 110, and the divided GOP 111 each including 10 pictures, and the divided GOP 112 including 6 pictures.

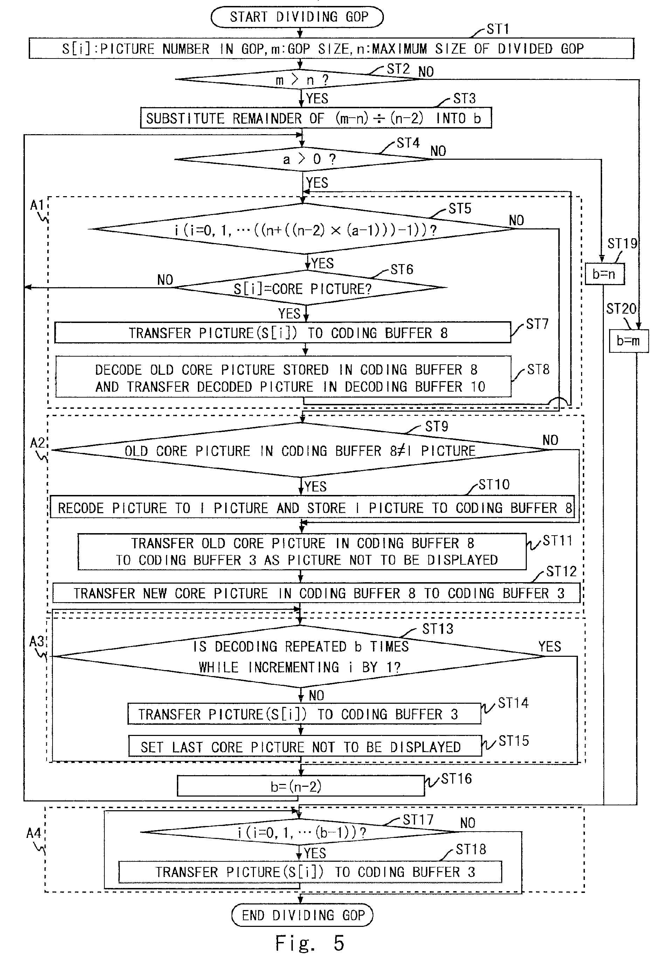

Next, detailed description is given of the GOP dividing processing for special playback in the information processing apparatus of this embodiment taking as an example the case of dividing the dividing-target GOP 108 including 30 pictures into the four divided GOPs 109 to 112. Fig. 5 is a flowchart of a processing for dividing the GOP including 30 pictures of Fig. 4.

Regarding the order in which divided GOPs are transferred to the coding buffer 3 for reverse playback, the transfer of GOPs starts with a subsequent (later) GOP, that is, a GOP that would be decoded later at the time of forward playback. In Fig. 4, the GOP 112, the GOP 111, the GOP 110, and the GOP 109 are transferred in the stated order. The coding buffer 3 stores the divided GOP in this order.

As described above, the stream analyzing unit 2 determines whether to divide a GOP or not. For that purpose, the unit calculates the number of pictures in the dividing-target GOP m to determine the preset maximum number of pictures (divided GOP maximum size) n in a divided GOP, and the picture number S [i] of each picture of a GOP in the stream (step ST1). In this example, m = 30 and n = 10. Further, the picture number S [i] ranges from S [0] to S [29], that is, S [0] = I1, S [1] = B0, ..., S [28] = P29, and S [29] = B28. Then, it is determined whether or not the number of pictures m of the dividing-target GOP 108 is larger than the divided GOP maximum size n (step ST2). If m > n, the dividing processing is started.

First, provided that "b" represents the number of transfer-target pictures to be transferred from the stream analyzing unit 2 to the coding buffer 3, b is derived from the following expression:
b = (m - n) ÷ (n - 2) ((m - n) % (n - 2) : % represents a remainder operator for dividing one term by the other (step ST3). In this case, (m - n) = 20, (n - 2) = 8, and the remainder of 20/8 is 4. Therefore, b = 4.

Next, based on the number of pictures m in the dividing-target GOP 108, and the divided GOP maximum size n, the number of divided GOPs (the number of dividing processes) A is derived from the following expression:

```
A = (((m - n)/(n - 2)) + 1)(0, 1,…, A) (step ST4).
```

Here, m = 30, n = 10, and (20/8) represents an integer of the quotient (= 2) of 20 by 8. Thus, the number of dividing processes A = 3, and the number of divided GOPs is calculated as follows: A + 1 = 4. Provided that "a" represents a variable obtained by decrementing the number of dividing processes A every process, and a > 0, that is, a processing target is not the last divided GOP, the process advances to step ST5.

Next, the division boundary of the divided GOP 112 to be first decoded in a processing of steps ST5 to ST8 (hereinafter referred to as "processing A1") is detected. The division boundary is detected between the (N - 1)th picture and the Nth picture based on N = (n + ((n - 2) (a - 1))). In this example, N necessary for the first division boundary 108a is calculated as follows: N = 10 + 8 x 2 = 26 (pictures). Thus, it is determined that the division boundary 108a is between a picture having the picture number i of 25 and a picture having the picture number i of 26. Thus, the dividing unit executes the processing A1 to the pictures, S[i] = S [0] to S [25] (= I1 to B24) .

In the processing A1, only I pictures or P pictures (core pictures) are first transferred to the coding buffer 8 in the order from the picture S [0] . That is, it is determined whether or not the picture number i of the read picture, S[i], is smaller than N (= 26) (step ST5). If i < N, the read picture, S [i], is a core picture (step ST6) . If the read picture, S [i], is a core picture, the core picture is transferred to the coding buffer 8 (step ST7) . If another core picture has been already stored in the coding buffer 8, the decoding unit 9 decodes and transfers the core picture to the decoding buffer 10 (step ST8) . The above process of steps ST5 to ST8 is repeated up to the picture number i of 25.

To elaborate, the picture, S [0] = I1, is first read in step ST5, determined as a core picture in step ST6, and stored in the coding buffer 8 in step ST7. Since the next picture, S[1] = B0, is not a core picture (step ST6: NO), a picture following the next picture, picture S[2] = P3, is read. Then, since the picture P3 is a core picture, this picture, S[3] = P3, is stored in a free space of the coding buffer 8. At this point, the coding buffer 8 stores two pictures (I1, P3) . After the two core pictures are stored, the decoding unit 9 decodes the I picture I1 that was stored first as the old core picture to store the decoded one to the decoding buffer 10. The picture, S[4] = P5, is next detected in step ST6, and transferred to the coding buffer 8. Then, the picture P5 is stored in a free space of the coding buffer 8, and the old core picture P3 that has been stored before is decoded by the decoding unit 9 and sent to the decoding buffer 10.

The coding buffer 8 and the decoding buffer 10 always ensure a free space for storing two pictures. Similar processing is repeated while sequentially overwriting a picture to each storage area of the buffer until the last picture, S [25] =B24, is detected. With the above processing, the coding buffer 8 stores the pictures, S [22] = P23 and S [24] = P25. The picture P23 that has been stored before is decoded by the decoding unit 9 and stored in the decoding buffer 10. At the completion of the processing of up to the picture, S [25], the next processing starts.

Next, in a processing of steps ST12 to ST5 (hereinafter, referred to as "processing A2"), the coding unit 11 executes a processing of recoding a decoded picture, generating an I picture to be inserted to the head of the divided GOP 112 to 110, and transferring the generated picture to the coding buffer 3.

First, it is determined whether or not a core picture (old core picture) that has been stored before among the pictures in the coding buffer 8 is an I picture (step ST9). If this old core picture is a P picture, not an I picture, the coding unit 11 recodes the picture into the I picture to overwrite the I picture on the P picture as the old core picture in the coding buffer 8 (step ST10) .

In this example, among the picture P23 and the picture P25, the picture P23 as the old core picture that is stored first is not an I picture (step ST9: YES), so the picture P23 in the decoding buffer 10 is recoded into an I picture by the coding unit 11 and overwritten onto the picture P23 in the coding buffer 8 (step ST10) . Then, the picture P23 recoded into the I picture is updated to a picture I23.

Next, the picture inserting unit 7 transfers pictures serving as first two pictures in a divided GOP from the coding buffer 8 to the coding buffer 3 at a timing designated by the stream analyzing unit 2. Here, since the overwritten I picture is the old picture, this picture is first transferred to the coding buffer 3. At this time, this I picture is transferred as a picture that is not to be displayed (step ST11). Then, the other picture in the coding buffer 8 (new core picture) is transferred to the coding buffer 3 (step ST12) . In this case, among the picture P25 and the picture I23 stored in the coding buffer 8, the recoded picture I23 (old picture) which appears ahead of the picture P25 in the stream sequence is first read and transferred to the coding buffer 3 as a picture not to be displayed. Next, the picture (new picture) P25 that appears behind the picture I23 in the stream sequence is transferred to the coding buffer 3. With the above processing, the picture P23 of the dividing-target GOP 108 of Fig. 4 is recoded into the picture I23 of the divided GOP 112, and the pictures I23 and P25 are transferred to the coding buffer 3 as first two pictures in the reverse playback order. Here, the newly generated picture I23 in the divided GOP 112 is used for the decoding process, not displayed. To that end, a flag or the like is set to recognize such a picture as a picture not to be displayed.

In a subsequent processing of steps ST13 to ST5 (hereinafter referred to as "processing A3"), a divided picture group composed of the remaining pictures in the divided GOP 112 is transferred. Provided that j (j = 0, 1, ...) represents the number of pictures of a divided picture group as a transfer target, the stream analyzing unit 2 determines whether or not j < b. Here, since the stream analyzing unit 2 starts the processing from the first picture in the stream of the divided GOP, j = 0. As regards i, i = N in step ST5. After the determination as to whether or not j < b, the numbers j and i are incremented (step ST13). If it is determined that j < b, the stream analyzing unit 2 transfers a picture, S[i], to the coding buffer 3 (step ST14). Further, the last core picture out of the divided picture group in the divided GOP, which is transferred from the stream analyzing unit 2, is set not to be displayed (step ST5). Incidentally, the processing of step ST5 is executed only when the variable a = 0 to (A - 1), and is not executed when a = A. That is, this processing is not executed for the last divided GOP (divided GOP that is first reproduced upon the reverse playback). Accordingly, in step ST5, the stream analyzing unit 2 determines whether or not the variable a of a divided GOP that is currently being generated is 0 to (A - 1). Only when a = 0 to (A - 1), the last core picture of the divided picture group is set not to be displayed, and is transferred to the coding buffer 3.

In this example, b = 4, and i = N = (n + ((n - 2) (a - 1))) = 26 in step ST4. Thus, 4 pictures P27, B26, P29, and B28 (S [26] to S [29]) are transferred to the coding buffer 3. Since the variable a = A = 3, and this processing is directed to the last divided GOP, step ST15 is skipped. Thus, the last core picture, S[28] = P29, is transferred like a general decoded P picture. At this point, the divided GOP 112 including 6 pictures I23 to B28 is generated.

Upon the completion of the transfer of 4 pictures (= b) to the coding buffer 3, the process advances to step ST16. In step ST16, b is set to (n - 2). In this example, b = (n - 2) = 8. Subsequently, the process returns to step ST4. That is, the stream analyzing unit 2 restarts reading pictures from the first picture (S [0] = I1) in the GOP (dividing-target GOP 108) of the stream, and the above processings A1 to A3 are repeated until the variable a equals 0.

To elaborate, when the process advances to step ST14 after b equals 8(step ST16), the variable a (= 3) is decremented, and it is determine whether or not the variable a > 0. After the processing for the divided GOP 112, the variable a equals 2, and the process advances to step ST5. When the variable a = 2, the third GOP 111 is generated. That is, in the processing A1, the starting position of the divided GOP 111 is detected. Here, i = 0, and N necessary for detecting the division boundary is recalculated, only core pictures among the pictures having the picture number i smaller than N (= (n + (n - 2) (a - 1)) = 18(S[17] = B16)) are sequentially stored in the coding buffer 8. Thus, the pictures, S[14] = P15 and S[16] = P17, are stored in the coding buffer 8 as the old core picture that is transferred just prior to the last one, and the new core picture that is transferred last, respectively. Then, the picture P15 as the old picture out of these pictures is decoded by the decoding unit 9 and stored in the decoding buffer 10.

In the next processing A2, the old core picture P15 is recoded into an I picture by the coding unit 11, and changed to the I picture I15 and overwritten to the coding buffer 8. Then, the pictures in the coding buffer 8 are read by the picture inserting unit 7 in the order of occurrence. That is, the pictures I15 and P17 are read in this order and transferred to the coding buffer 3. The pictures I15 and P17 are first two pictures of the divided GOP 111. The picture I15 is set not to be displayed.

In the processing A3, a divided picture group composed of the remaining pictures in the divided GOP 111 is transferred from the stream analyzing unit 2 to the coding buffer 3. Here, b equals 8 in step ST13, and i becomes 18 in the course of step ST5 to steps ST9 to ST12. Thus, among the 18 pictures (i = 18), 8 pictures, S[18] to S[25] = P19 to B24, are transferred to the coding buffer 3 as the divided picture group. Since the variable a = 0 to 3, and this processing is targeted at the variable a of 2, the above process of step ST5 is executed. That is, the stream analyzing unit 2 sets the last core picture, S[24] = P25, of the divided picture group to a picture not to be displayed, and transfers the picture to the coding buffer 3 (step ST5) .

After that, if the variable a = 1, the second divided GOP 110 is similarly generated. The starting position of the GOP 110 is detected in the processing A1. That is, among the pictures having the picture number i (i = 0 and i < 10(S [0] = I1 to S[9] = B8)), only core pictures are sequentially stored in the coding buffer 8. Next, in the processing A2, the old picture P7 out of the finally stored pictures P7 and P9 is recoded to the picture 17, and the pictures 17 and P9 become first two pictures of the GOP 110. Subsequently, in the processing A3, among the 10 pictures (i = 10), the remaining 8 pictures, that is, the pictures P11 to B16 are transferred from the stream analyzing unit 2 to the coding buffer 203.

After that, when the process is shifted from step ST16 to step ST4, since the variable a = 0, the process advances to step ST19. In step ST19, b = n = 10, and in a processing of steps ST17 and ST18 (hereinafter referred to as "processing A4"), a processing of generating the top divided GOP is executed.

In the process of generating the top divided GOP in steps ST17 and ST18, i = 0, and it is determine whether or not i < b. If i < b, the pictures (S[i]) are transferred from the stream analyzing unit 2 to the coding buffer 3 as the divided picture group. When the picture having the picture number i of 0 (S[i] = S [0]) is transferred, the picture number i is incremented. This process is ended when i = b. In this way, at the time of generating the top divided GOP (first GOP) 109, the divided picture group composed of 10 pictures I1 (S[0]: i = 0) to B8 (S[9]: i = 9) is transferred to the coding buffer 203. Although not shown, in the case of transferring pictures in the last divided GOP from the stream analyzing unit 2 as well, the above process of step ST15 is executed. That is, the stream analyzing unit 2 sets the last core picture, S[9] = P9, to a picture not to be displayed and transfers the picture to the coding buffer 3.

Through the above procedure, the GOP 108 including 30 pictures (the picture I1 to the picture B28) can be divided into the GOP 109 including 10 pictures (the picture I1 to the picture B8), the GOP 110 including 10 pictures (the picture I7 to the picture B16), the GOP 111 including 10 pictures (the picture I15 to the picture B24), and the GOP 112 including 6 pictures (the picture I23 to the picture B28).

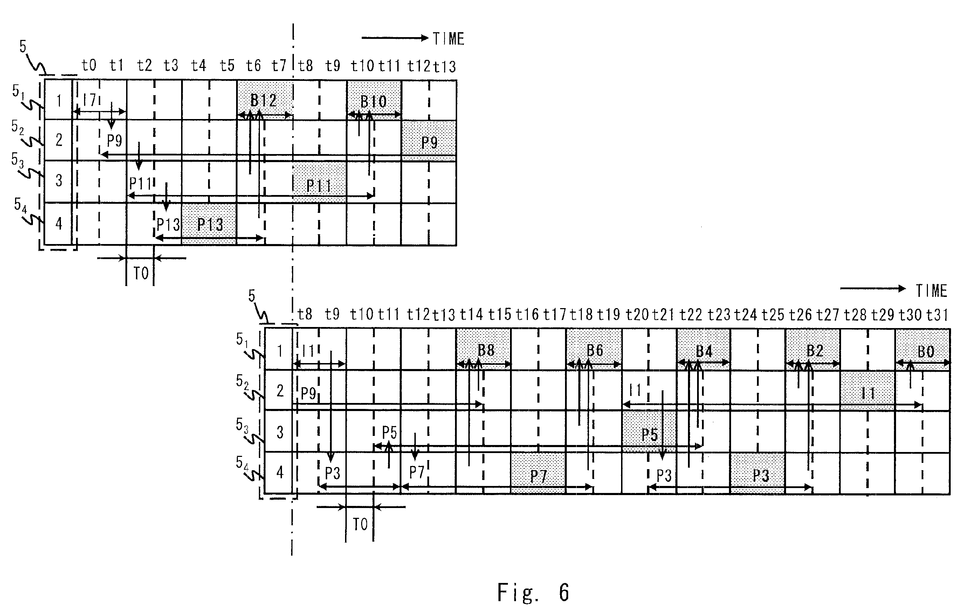

Next, description is given of such a processing that the coding buffer 3 receives the thus-processed divided GOP to play back the GOP in reverse. For ease of illustration, the case of sequentially playing back the divided GOPs 104 and 103 obtained by dividing the GOP 101 of Fig. 3 in reverse is described. In addition, a buffer capable of storing 4 pictures is used as the decoding buffer 5. An upper section of Fig. 6 shows the divided GOP 104 that is first transferred to the coding buffer 3, and a lower section of Fig. 6 shows the GOP 103 that is transferred next. The upper and lower sections demonstrate a timing at which a decoded picture is stored in the decoding buffer 5 capable of storing 4 pictures and a timing at which the decoded picture is displayed on the display unit 6, respectively.

In Fig. 6, denoted by $5_1$ to $5_4$ are picture storage areas of the decoding buffer 5. Further, t0 to t31 represent predetermined periods. In this example, during a period from t0 to t3, the core picture in the divided GOP 104 is decoded, and during a period from t8 to t12, core picture in the divided GOP 103 is decoded. The decoded core picture is stored in any one of the storage areas $5_1$ to $5_4$ of the decoding buffer. The arrow in the horizontal direction (widthwise direction of Fig. 6) represents a period in which each decoded picture is stored in the decoding buffer. Further, T0 denotes an image field display period, and shaded portions correspond to a display timing for each picture, and a period necessary for displaying each picture.

For example, the picture I7 is decoded at period t0, and stored in the decoding buffer $5_1$ during a period from t0 to t1. The picture P13 is decode at period t3, stored in the decoding buffer $5_4$ during a period from t3 to t6, and displayed during a period from t4 to t5. In addition, which core picture is necessary for decoding a target picture is indicated by the arrow in the veridical direction (length direction of Fig. 6); the arrow extends from the core picture necessary for decoding the target picture toward the target picture. For example, as for the picture P9 decoded at period t1, the picture P9 is decoded using the decoded picture I7.

In the decoding buffer 5, only I pictures and P pictures (core pictures) out of the pictures in a GOP are first decoded while being overwritten to any one of the decoding buffers $5_1$ to $5_4$ at the timing of Fig. 6. The divided GOP 104 of Fig. 3 is transferred to the coding buffer 3 in the order of 17, P9, P11, B10, P13, and B12 as mentioned above. Among those, the pictures I7 and P9 are inserted by the picture inserting unit 7. The decoding unit 4 first decodes the picture I7 that has been first transferred at period t0 to store the decoded picture in the decoding buffer 51. Next, the picture P9 is decoded using the decoded picture 17, the picture P11 is decoded using the decoded picture P9, and the picture P13 is decoded using the decoded picture P11 at t1 to t3. The picture 17 is used only for decoding the picture P9 and thus becomes unnecessary after the completion of decoding the picture P9, that is, period t2, and the decoding buffer $5_1$ can be used.

Next, the decoded picture P13 is first displayed during a period from t4 to t5 (see Fig. 2) . Then, the decoded picture P13 and the picture P11 decoded and stored in the decoding buffer $5_3$ are used to decode the picture B12. The decoded picture is stored in the free decoding buffer $5_1$ and displayed during a period from t6 to t7. In this way, reverse playback is executed using each storage area of the decoding buffers 5 that can be used and the core picture decoded first.

In this example, the reverse playback of the GOP 103 follows the reverse playback of the GOP 104, so the decoding process for the subsequent divided GOP 103 is started at the timing t8 when the GOP 104 is being displayed. As demonstrated in the lower section of Fig. 6, also in this case, the core picture in the GOP 103 is decoded to thereby display the picture B8 during a period from t14 to t15 after the display (playback) of the picture P9 during a period from t14 to t15 by using a free space of the decoding buffers 5.

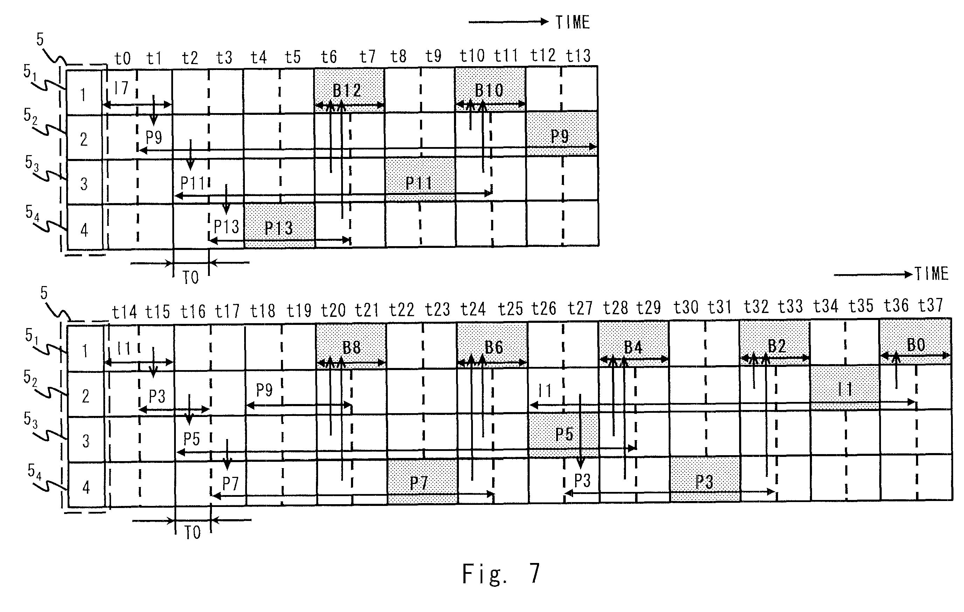

Incidentally, in the case where continuous reverse playback is unnecessary, the processing may be carried out in accordance with timings of Fig. 7, for example. In this case, although the display period of the picture P9 is somewhat increased, the timing of the reverse playback processing can be easily controlled in a simple manner.

Modified Example of First Embodiment

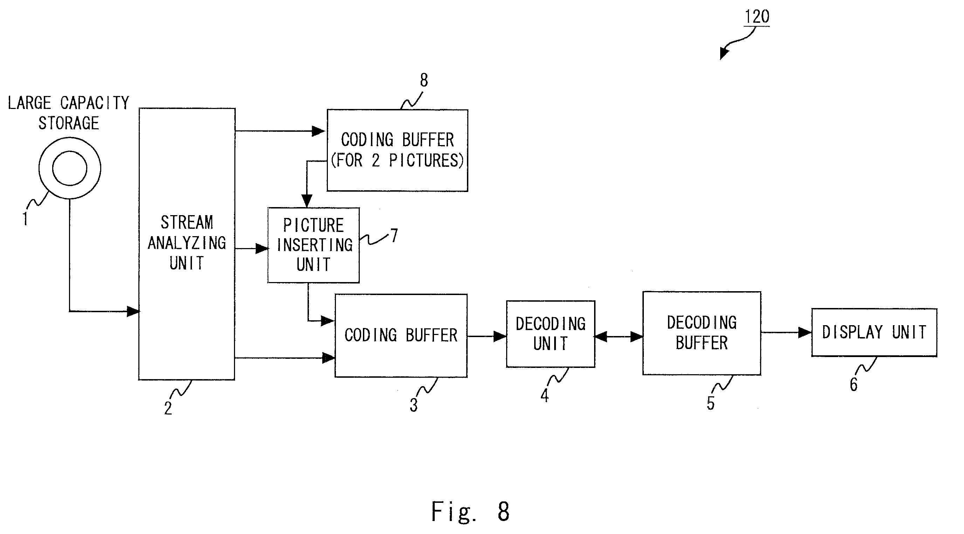

Next, a modified example of the first embodiment is described. Fig. 8 is a block diagram showing an information processing apparatus according to the modified example of the first embodiment of the invention. Incidentally, in this modified example of Fig. 8, and other embodiments described later, the same components as those of the first embodiment as shown in Fig. 1 are denoted by like reference numerals, and detailed description thereof is omitted.

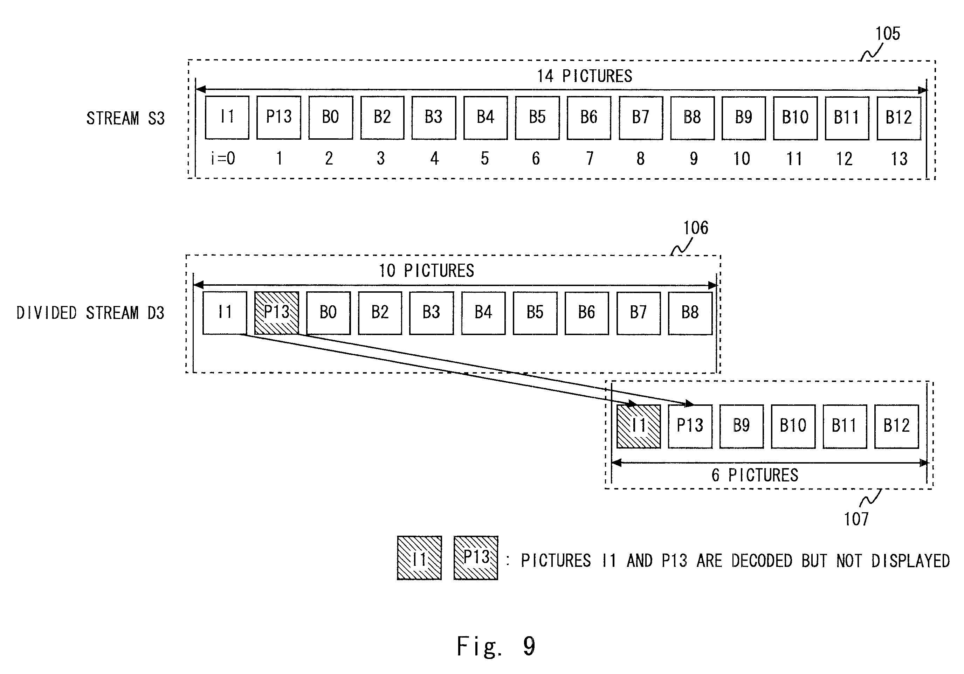

Fig. 9 shows a stream S3 including a GOP having a sequence of B pictures and a stream D3 including a divided GOP obtained by dividing the GOP in the stream S3. A GOP 105 of Fig. 9 has 14 pictures, and all pictures but first two pictures in the stream sequence, that is, the pictures (S[2] to S[13]) except the pictures (S[0] = I1 and S [1] =P13) are B pictures. This modified example describes the case of dividing the GOP 105 in such a stream having a sequence of B pictures.

As shown in Fig. 8, the information processing apparatus 120 of this example dispenses with the decoding unit 9, the decoding buffer 10, and the coding unit 11 provided downstream of the coding buffer 8 of Fig. 1. That is, the dividing unit includes only the coding buffer 8. If B pictures appear one after another as in the GOP 105 of Fig. 9, it is unnecessary to recode a P picture in the dividing-target GOP 105 into an I picture. That is, all pictures but first two pictures in the GOP 105 are B pictures, and no P picture exists in the GOP 105. Hence, there is no need to recode a P picture into an I picture. Therefore, in the case of dividing the dividing-target GOP 105 of Fig. 9 into the divided GOPs 106 and 107 with the information processing apparatus 120 of this example, the I picture 11 and the P picture P13 of the dividing-target GOP 105 can be used as they are. This makes it unnecessary to generate an insertion-target picture at the unit subsequent to the coding buffer 8 as a dividing process unlike the above example. In this case, the I picture I1 and the P picture P13 transferred from the stream analyzing unit 2 are stored in the coding buffer 8. At predetermined timings, the picture inserting unit 7 transfers the pictures I1 and P13 to the coding buffer 3, after which subsequent pictures B9 to B12 (divided picture group) are transferred from the stream analyzing unit 2, whereby the divided GOP 107 can be stored in the coding buffer 3.

Thus, the GOP 105 can be divided into the divided GOP 106 including the pictures I1 to B8 and the divided GOP 107 including the pictures I1 to B12, and the GOP 107 and the GOP 106 can be transferred to the coding buffer 3 in this order without recoding to an I picture. Incidentally, the information processing apparatus only needs to buffer the core pictures (I1, P13) until the transfer of the remaining I picture B9. Thus, the stream analyzing unit 2 may include the coding buffer 8 and the picture inserting unit 7 or other such processing units.

In this embodiment, a dividing-target GOP having a given length can be divided into a divided GOP with a desired length. Therefore, a performance of special playback such as reverse playback can be improved. At the time of reverse playback, the number of pictures in 1 GOP influences a size of a coding buffer or decoding buffer, so a requisite buffer capacity varies depending on an input stream. This causes a problem in that a larger buffer costs high, and a smaller buffer is insufficient for the special playback. In contrast thereto, according to the information processing apparatus of this embodiment, the GOP as an access unit is divided to yield divided GOPs the maximum number of which is limited, whereby special playback can be executed irrespective of the number of pictures in 1 GOP, for example. Further, the buffer can be configured with efficiency, so the pictures can be efficiently decoded for the reverse playback even with a smaller memory capacity.

Next, beneficial effects of the present invention are described in more detail. A first effect of the information processing apparatus of this embodiment is that even at the time of special playback, the size of the decoding buffer 5 can be determined. As a conceivable solution to how to execute the processing with the highest efficiency in a simple manner for reverse playback, a size of the coding buffer is arbitrarily set, and all pictures in 1 GOP are stored in the decoding buffer 5. With such a conventional special playback method, the maximum number of pictures in 1 GOP cannot be determined, so the size of the decoding buffer 5 cannot be determined. Assuming that there are 10 pictures, and the decoding buffer 5 ensures the capacity corresponding to 10 pictures, there is a possibility that a stream including a GOP having over 10 pictures cannot be played back in reverse.

In contrast, in this embodiment, the maximum number of pictures in the GOP 101 can be determined by dividing the GOP 101. That is, the size of the decoding buffer 5 can be determined, and the decoding buffer 5 can be designed while setting the maximum GOP size as a size corresponding to 10 pictures. Thus, even the stream including the GOP having over 10 pictures can be played back in reverse by dividing the GOP into the divided GOPs 103 and 104 each including 10 or less pictures as shown in Fig. 3, for example.

As a second effect of this embodiment is that the size of the coding buffer 3 can be determined even at the time of special playback. Description is given of the case where the coding buffer 3 is designed so as to store all pictures in 1 GOP of the stream, for example, and as shown in Fig. 2, the decoding buffer 5 is capable of storing 4 pictures. In this case, with the conventional special playback method that does not divide the GOP, the maximum number of pictures in 1 GOP cannot be determined. That is, the maximum GOP size varies depending on a stream and is undefined, so the size of the coding buffer 3 cannot be determined. Assuming that the buffer ensures a capacity corresponding to 10 pictures, the GOP including over 10 pictures in the stream as shown in Fig. 2 or 4 cannot be stored, and the reverse playback cannot be executed.

In contrast, in this embodiment, the GOP can be divided into a divided GOP including a predetermined number of pictures or less, so the maximum number of pictures in 1 GOP (maximum GOP size) can be determined. That is, the maximum size of the divided GOP can be designed as the size of the coding buffer 3. For example, in the case of designing the coding buffer 3 corresponding to 10 pictures, a stream having a GOP including over 10 pictures can be played back in reverse by dividing the GOP into a group of 10 pictures.

A third effect of this embodiment is that an amount of data to be decoded can be reduced, and special playback can be efficiently carried out. For example, description is given of the case where the size of the coding buffer 3 is arbitrarily set with respect to a stream, and the decoding buffer 5 of Fig. 1 has a capacity corresponding to 4 pictures. In this case, with the convictional method that does not divide the GOP, it is necessary to determine a picture decoding timing, designate a storage location in the decoding buffer 205, and determine a position and timing at which pictures are read from the large capacity storage 201 for redecoding in accordance with the number of pictures in 1 GOP and the picture configuration as shown in Fig. 13.

In contrast, in this embodiment, the number of pictures in 1 GOP can be determined by dividing the GOP into a preset size. Accordingly, a decoding and display timing table can be prepared. Then, one or more timing tables are stored in accordance with the picture configuration of the GOP, for example, whereby every possible stream can be decoded efficiently and played back in reverse.

Further, the maximum number of pictures for dividing the GOP is derived from the number of pictures storable in the decoding buffer 5, whereby the timing table can be more simplified. For example, a timing table of Fig. 7 is simpler than a conventional timing table for special playback of Fig. 13.

A fourth effect of this embodiment is that the number of times the same picture is decoded can be reduced to enable more efficient special playback. For example, if a size of the coding buffer 3 is arbitrarily set with respect to the stream S1 of Fig. 2, which includes a GOP having 14 pictures, and the decoding buffer 5 has a capacity corresponding to pictures, with the conventional special playback method that does not divide the GOP, as shown in Fig. 13, the number of decoding processes for a specific picture increases. That is, in Fig. 13, the pictures I1 and P3 are decoded three times, and the pictures P5 and P7 are decoded twice.

In contrast, in this embodiment, the GOP is divided into the GOPs 103 and 104 each including 10 or less pictures, whereby as shown in Figs. 6 and 7, the special playback can be executed only by decoding the pictures I7 and P9 twice. That is, it is sufficient to decode the other picture once, and the number of picture decoding processes can be significantly reduced as compared with the conventional method. In this way, the GOP is divided to more efficiently execute a decoding process. As the number of pictures in the GOP of the original stream increases, the number of redecoding processes for the core picture increases. Hence, dividing the GOP contributes to higher decoding efficiency.

Second Embodiment

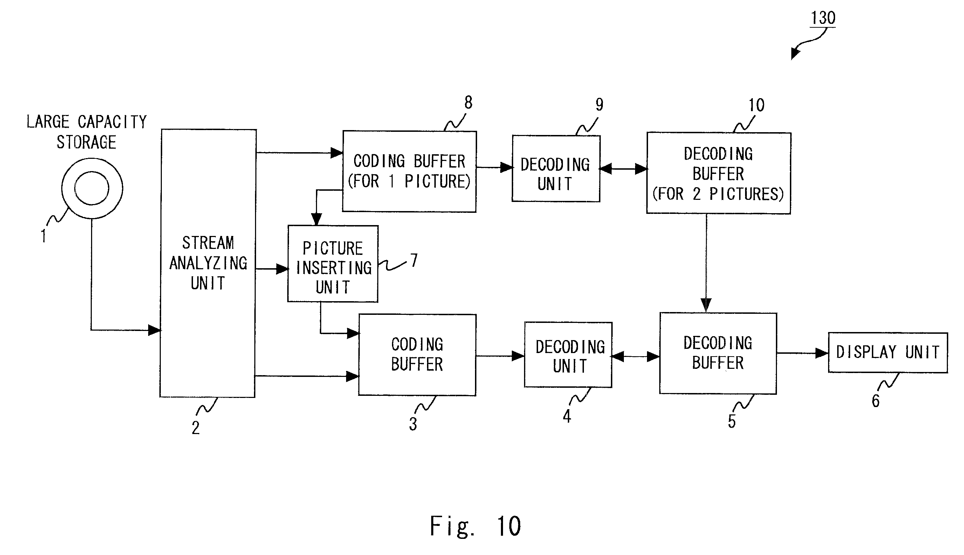

Fig. 10 is a block diagram showing an information, processing apparatus according to a second embodiment of the present invention. In the first embodiment, the divided GOP includes the I picture as a core picture, but in this embodiment, the decoded picture that is decoded by the decoding unit 9 and stored in the decoding buffer 10 is directly transferred to the decoding buffer 5 to omit the recoding process and the transfer process for the I picture.

As shown in Fig. 10, the coding buffer 8 in the information processing apparatus of this embodiment 130 only needs to have a storage area enough to buffer 1 picture. Then, the decoding unit 9 for decoding the picture transferred to the coding buffer 8 is provided downstream of the coding buffer 8 similar to the first embodiment. Following the decoding unit 9, the decoding buffer 10 capable of buffering 2 pictures is provided. Here, the decoding buffer 10 of this embodiment can transfer the decoded picture to the decoding buffer 5.

That is, the dividing unit of this embodiment is composed of the coding buffer 8, the decoding unit 9, and the decoding buffer 10. Instead of transferring the I picture generated by recoding the decoded picture as the insertion-target picture in the first embodiment, the decoded picture is transferred to the decoding buffer 5.

The stream analyzing unit 2 generates identification information (hereinafter referred to as "flag") which indicates that the decoding buffer 10 transfers the decoded picture to the decoding buffer 5 to supply the information to the picture inserting unit 7. That is, the identification information indicates whether or not the I picture to be transferred first to the coding buffer 3, which is the oldest one in the stream of the divided GOP is stored in the decoding buffer 5 as the decoded picture.

Similar to the first embodiment, the picture inserting unit 7 transfers the core picture stored in the coding buffer 8 to the coding buffer 3 under the control of the stream analyzing unit 2 and transfers the flag. The flag is transferred to the coding buffer 3 in place of the core picture to be transferred, at the transfer timing set for this core picture.

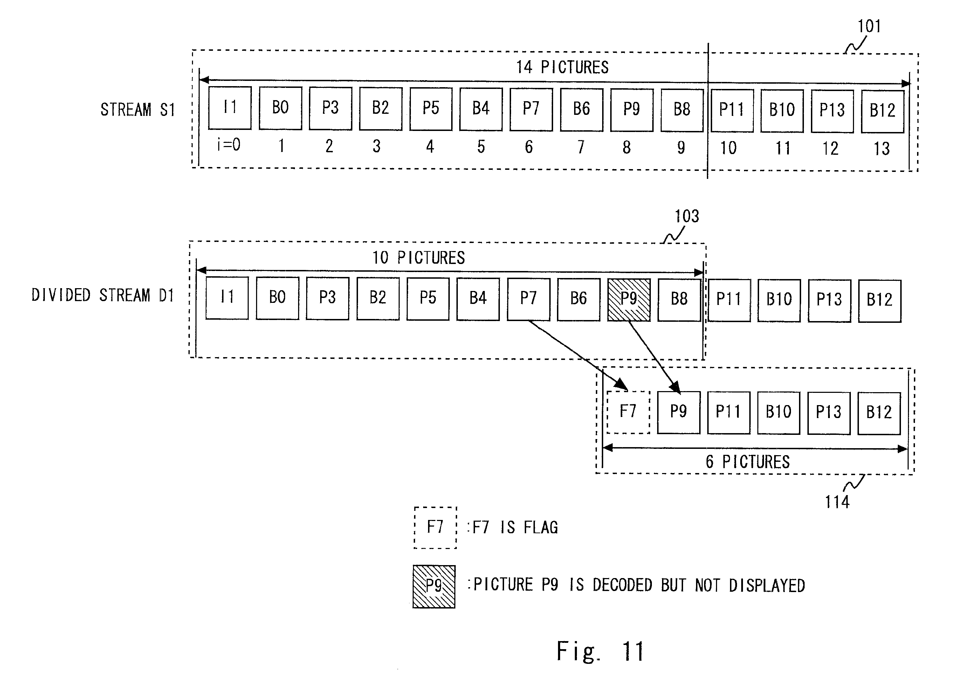

Next, an operation of the information processing apparatus of this embodiment is described. Here, description is made of the case of dividing the dividing-target GOP 101 of the stream S1 as illustrated in Fig. 3 into the divided GOPs 103 and 114 of Fig. 11. Fig. 11 shows the dividing-target GOP 101, and the divided GOPs 103 and 114. The dividing method is the same as that of the first embodiment. That is, the number of pictures b of the pictures that are transferred from the stream analyzing unit 2 to the coding buffer 3 is first calculated based on m = 14 and n = 10 to calculate the variable a as the number or dividing processes (the number of divided GOPs). Then, in the processing A1, the core picture is detected. In the first embodiment, the coding buffer 8 stores two core pictures at a time. If a new core picture is transferred, the core picture stored first is transferred to the decoding unit 9 and decoded, and the new core picture is stored and overwritten to the original core picture. In contrast, in the information processing apparatus 130 of this embodiment, the coding buffer 8 always stores one core picture.

Accordingly, the first picture I1 in the dividing-target GOP 101 is first transferred to the coding buffer 8. The decoding unit 9 decodes the picture I1 transferred to the coding buffer 8 and stores the decoded picture in the decoding buffer 10. When the stream analyzing unit 2 transfers the picture P3 as the next core picture, the picture P3 is overwritten to the picture I1 stored in the coding buffer 8. The decoding unit 9 decodes the picture P3 using the decoded picture I1. stored in the decoding buffer 10, and transfers the decoded picture to the decoding buffer 10.

The above processing is repeated until i < N(= 10) . At the time when the picture P9 (S[8] = P9) as the last core picture among the pictures having the picture number i of 0 to 9 (i = 0 to 9) is transferred, the picture P7 (S[6]=P7) transferred just before the picture P9 is decoded by the decoding unit 9 and stored in the decoding buffer 10. Here, in this embodiment, the picture P7 transferred to the decoding buffer 10 is transferred to the decoding buffer 5 without being recoded into an I picture.

In the first embodiment, in the processing A2, the decoded picture P7 stored in the decoding buffer 10 is recoded into an I picture as the picture I7, and the picture I7 is transferred to the coding buffer 8. The picture inserting unit 7 transfers the picture to the coding buffer 3. In contrast, in this embodiment, at the timing when the picture 17 is inserted to the coding buffer 3, the flag indicating that the decoding buffer 10 stores the decoded picture P7 is received from the stream analyzing unit 2 and inserted. Incidentally, the flag may be generated by the picture inserting unit 7. Further, the flag may be supplied from the stream analyzing unit 2 to the coding buffer 3.

More specifically, the picture inserting unit 7 transfers the flag (F7) in place of the first picture in the divided GOP 114 of Fig. 11, and the picture P9 stored in the coding buffer 8 is then transferred.

The processing A3 is similar to that of the first embodiment. Following the transfer of the picture P3, the stream analyzing unit 2 transfers a divided picture group composed of four remaining pictures (P11, B10, P13, and B12) in the divided GOP 104. With the above processing, the flag F7 indicating whether or not the decoded picture P7 is stored, and the divided GOP including the pictures P9 to B12 are stored in the coding buffer 3.

The I picture important for decoding the GOP is an image including all information necessary for decoding, and does not require any information about already decoded images. Likewise, the already decoded picture P7 can be used like the I picture. Hence, it is possible to decode another picture using the decoded picture P7. In other words, if the flag F7 indicating that the decoding buffer 5 stores the decoded picture P7 is detected, the decoding unit 4 may decode picture P9 using the decoded picture P7 transferred from the decoding buffer 10 to the decoding buffer 5. Thus, the recoded picture I7 necessary in the first embodiment becomes unnecessary for the divided GOP, but the decoding efficiency during the reverse playback can be improved as in the first embodiment.

In this embodiment, the coding buffer 8 has only to buffer 1 picture. Moreover, the coding unit 11 is unnecessary, which simplifies the system configuration and saves the memory capacity. Further, at the time of special playback, the decoding unit 4 does not need to decode the picture I7.

Third Embodiment

In the above first and second embodiments, a dividing target is a single GOP, and the GOP is divided to yield plural divided GOPs . However, plural GOPs may be divided. In a third embodiment of the invention, the plural GOPs are assumed as one dividing-target GOP and divided using the above information processing apparatus 100, 120, and 130.

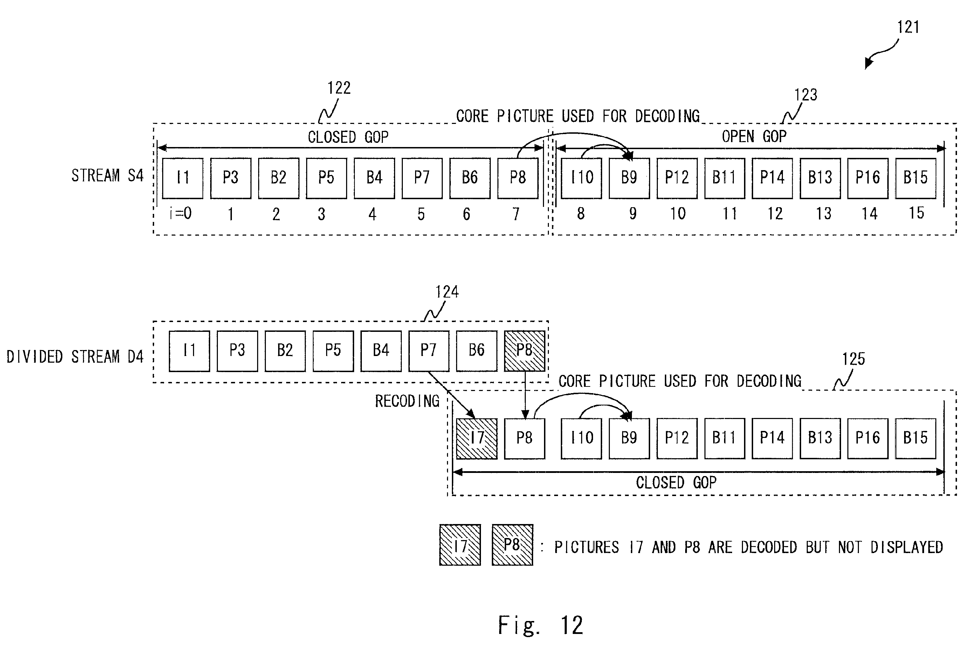

Fig. 12 shows a stream S4 having the dividing-target GOP of the third embodiment, and a stream D4 having the divided GOP. In this embodiment, the dividing-target GOP composed of the plural GOPs is divided, so the original GOP in the stream is converted into a GOP different from the original one.

The GOP includes an Open GOP that requires picture information displayed first upon the forward playback and a Closed GOP that does not require such information. In this embodiment, the same processings as the first and second embodiments are carried out to convert the Open GOP to the Closed GOP.

Next, a method of converting the Open GOP to the Closed GOP is described. The stream S4 of Fig. 12 includes a GOP 122 and a GOP 123. The stream S4 is changed to the stream D4 after the division. The GOP 122 is the Closed GOP, and the GOP 123 is the Open GOP. In the case of converting the Open GOP to the Closed GOP, the stream analyzing unit 2 assumes the GOP 122 and the GOP 123 as one GOP, and sets the one GOP as the dividing-target GOP 121. Then, the recoded picture I7 and picture P8 are inserted before the picture I10 in a fashion similar to the first embodiment. In this case as well, the picture I7 recoded and inserted to the divided GOP 125 and the last core picture (= picture P8) in the stream sequence of the divided GOP 124 are set not to be displayed. Incidentally, the divided GOP 124 corresponds to divided GOPs obtained by dividing the dividing-target GOP 121 except the latest divided GOP.

Incidentally, in this embodiment, the GOP is divided so as to set the GOP 125 that is played back in reverse first as the maximum GOP. However, similar to the first embodiment, it is needless to say that the dividing process is executed such that the number of pictures m in the dividing-target GOP 121 is 16, the maximum size n of the divided GOP is 10, and the division boundary is defined between the (N - 1)th picture and the Nth picture. That is, the dividing process may be executed such that, among the divided GOPs, a divided GOP that is played back in reverse later is set to the maximum GOP whose size corresponds to 10 pictures. In this case, core pictures preceding the picture B9 of the GOP 123 are used to generate and insert an insertion-target picture, and the stream analyzing unit 2 transfers the pictures P12 to B15. In this way, the divided GOP may be obtained.

If the GOP 122 is displayed prior to the GOP 123 upon forward playback, the Open GOP requires information about the picture P8 in the GOP 122 and its own picture I10 for decoding the picture B9 in the GOP 123. In order to decode the picture B9 of the other GOP, it is necessary to execute control over the GOPs. That is, in the case of decoding the GOP 123, the core pictures are decoded in the order from the first picture I1 in the GOP 122, and after the completion of decoding up to the picture P8, the GOP 123 should be decoded.

Thus, at the time of reverse playback, for example, in order to display the picture B9, the other GOP 122 as well as the GOP 123 including the picture B9 should be decoded to obtain the picture P8. As a result, the maximum number of pictures stored in the coding buffer 3, and the maximum number of pictures stored in the decoding buffer 5 cannot be determined, or increase, with the result that the special playback cannot be executed, the buffer capacity increases, or the decoding efficiency drops.

In contrast, in this embodiment, the Open GOP 123 is converted into the Closed GOP 125 the maximum size of which is limited. That is, in order to decode the picture B9 in the GOP 125, the picture I7 and the picture P8 in the GOP 125 are decoded, the picture I10 is decoded, and the picture B9 can be decoded based on the pictures I10 and P8. Thus, it is unnecessary to execute control over two or more GOPs, and the GOP 123 can be decoded without considering the array of the pictures in the GOP 122.

The divided GOPs generated through the dividing process of the first and second embodiment are all Closed GOPs. If the GOP includes the Open GOP, the Open GOP can be converted to the Closed GOP. By converting the Open GOP to the Closed GOP, it is unnecessary to execute control over GOPs, and a decoding process for the special playback such as reverse playback can be simplified.

As detailed above, the first to third embodiments produce the following beneficial effects:

1. It is unnecessary to limit the number of pictures in 1 GOP.
2. It is unnecessary to control a decoding process over GOPs with the Open GOP.
3. A memory capacity can be saved.
4. The decoding efficiency for the reverse playback can be improved.

It is apparent that the present invention is not limited to the above embodiment that may be modified and changed without departing from the scope and spirit of the invention. For example, the above embodiments describe the hardware component, but the present invention is not limited thereto, and a given processing can be carried out by a CPU (Central Processing Unit) executing a computer program. In this case, the computer program may be recorded on a recording medium or transferred through a transmission medium such as the Internet.

**Claims**

1. An information processing apparatus capable of reproducing video information, comprising:

    an analyzing unit for detecting a division boundary along which a dividing-target GOP including one or more GOPs is divided into a plurality of GOPs as divided GOPs;

a dividing unit for generating an insertion-target picture based on a picture of a specific type among pictures from the first picture to the division boundary in the dividing-target GOP; and

a picture inserting unit for inserting insertion information about the insertion-target picture into a divided picture group including one or more pictures obtained by dividing the dividing-target GOP along the division boundary, which is transferred at least from the analyzing unit.

2. The information processing apparatus according to claim 1, wherein the dividing-target GOP is a single GOP, and the divided GOP includes pictures the number of which is smaller than the number of pictures in the dividing-target GOPs and not more than a predetermined number of pictures.

3. The information processing apparatus according to claim 1 or 2, wherein the dividing unit includes a first coding buffer for storing only an intra picture or a forward predictive picture among the pictures preceding the division boundary, which are transferred from the analyzing unit.

4. The information processing apparatus according to one of Claims 1 to 3 wherein the dividing unit includes:

a first coding buffer for storing only an intra picture or a forward predictive picture among the pictures preceding the division boundary, which are transferred from the analyzing unit; and

a first decoding unit for decoding the core picture transferred to the first coding buffer.

5. The information processing apparatus according to one of claims 1 to 4, further comprising:

a second coding buffer for storing the insertion information and the divided picture group transferred from the analyzing unit; and

a second decoding unit for decoding the divided GOP based on the insertion information and the divided picture group transferred to the second coding buffer.

6. The information processing apparatus according to one of claims 1 to 5, wherein the core pictures transferred from the analyzing unit are sequentially overwritten and stored into the first decoding buffer,

the first decoding unit receives and decodes a core picture before being overwritten,

the picture inserting unit inserts a core picture transferred to the first coding buffer and identification information indicating whether or not a decoded picture that is finally decoded by the first decoding unit are stored, as the insertion information to the top of the divided picture group, and

the second decoding unit decodes the divided GOP based on the divided picture group stored in the second coding buffer with the insertion information being inserted at the top, and the decoded picture that is finally decoded by the first decoding unit.

7. The information processing apparatus according to one of claims 1 to 6, wherein the first decoding unit includes a coding unit for recoding the decoded picture into an intra picture and transferring the intra picture as a new core picture to the first coding buffer.

8. The information processing apparatus according to one of claims 1 to 7, wherein the first coding buffer sequentially stores the core pictures transferred from the analyzing unit,

the first decoding unit decodes a second core picture transferred prior to a first core picture transferred last among the core pictures,

the coding unit recodes the decoded first core picture into an intra picture and transfers the intra picture as a new core picture to the first coding buffer, and

the picture inserting unit inserts at least the new core picture as the insertion information.

9. The information processing apparatus according to one of claims 1 to 8, wherein the first coding buffer has a storage area capable of storing two or more of the core pictures,

the first decoding unit decodes the first core picture transferred prior to the second core picture transferred last, out of the core pictures,

the coding unit recodes the first core picture into an intra picture and overwrites the intra picture as a new core picture to a storage area of the first coding buffer where the first core picture is stored, and

the picture inserting unit sequentially inserts the second core picture and the overwritten new core picture as the insertion information.

10. The information processing apparatus according to claim 1, wherein the dividing-target GOP includes two or more GOPs, and one of the two or more GOPS requires information about the other GOP upon decoding, and
the divided GOP includes a predetermined number of pictures or less.

11. The information processing apparatus according to one of claims 1 to 10, further comprising a display unit for displaying a decoded picture that is decoded by the first decoding unit.

12. The information processing apparatus according to one of claims 1 to 11, further comprising a reproduce unit performing a reverse playback by using the divided GOPs.

13. The information processing apparatus according to one of claims 1 to 12, further comprising a reproduce unit performing a reverse playback by using the divided GOPs.

14. An information processing method for reproducing video information, comprising:

detecting a division boundary along which a dividing-target GOP including one or more GOPs is divided into a plurality of GOPs as divided GOPs;
generating an insertion-target picture based on a picture of a specific type among pictures from the first picture to the division boundary in the dividing-target GOP; and
generating the divided GOP based on insertion information about the insertion-target picture and a divided picture group including one or more pictures obtained by dividing the dividing-target GOP along the division boundary.

15. The information processing method according to claim 14, wherein the dividing-target GOP is a single GOP, and the divided GOP includes pictures the number of which is smaller than the number of pictures in the dividing-target GOPs and not more than a predetermined number of pictures.

16. The information processing method according to claim 15 , wherein the insertion information is generated based on only core pictures as intra pictures or forward predictive pictures among the pictures preceding the division boundary.

17. The information processing method according to claim 15, wherein only core pictures as intra pictures or forward predictive pictures among the pictures preceding the division boundary are sequentially transferred to a coding buffer, the core pictures transferred to the coding buffer are sequentially decoded,
a first core picture that is finally transferred to the coding buffer and identification information indicating whether or not decoded pictures obtained by decoding a second core picture that is transferred prior the first core picture are stored are inserted as the insertion information to the top of the divided picture group,, and
the divided GOP is decoded based on the divided picture group with the insertion information being inserted at the top, and the decoded picture obtained by decoding the second core picture.

18. The information processing method according to claim 15, wherein only core pictures as intra pictures or forward predictive pictures among the pictures preceding the division boundary are sequentially transferred to a coding buffer, the core pictures transferred to the coding buffer are decoded,
the decoding picture is recoded into an intra picture and overwritten as a new core picture to the coding buffer, and information stored in the coding buffer is inserted to the divided picture group as the insertion information.

19. The information processing method according to claim 15, wherein only core pictures as intra pictures or forward predictive pictures among the pictures preceding the division boundary are sequentially transferred to a coding buffer to store the two or more core pictures in the coding buffer,
a second core picture transferred prior to a first core picture that is finally transferred among the core pictures transferred to the coding buffer is read from the coding buffer and decoded,
the decoded second core picture is recoded into an intra picture and overwritten to the second core picture of the coding buffer, and
the first core picture and the overwritten second core picture are sequentially inserted to the top of the divided picture group.

EP 1 725 049 A1

Fig. 1

STREAM S1

| I1 | B0 | P3 | B2 | P5 | B4 | P7 | B6 | P9 | B8 | P11 | B10 | P13 | B12 | I15 | B14 |

101

DISPLAY ORDER PT1
FOR FORWARD PLAYBACK

| B0 | I1 | B2 | P3 | B4 | P5 | B6 | P7 | B8 | P9 | B10 | P11 | B12 | P13 |

102

Fig. 2

EP 1 725 049 A1

Fig. 3

STREAM S1

| I1 | B0 | P3 | B2 | P5 | B4 | P7 | B6 | P9 | B8 | P11 | B10 | P13 | B12 |

14 PICTURES

i=0  1  2  3  4  5  6  7  8  9  10  11  12  13

N−1 | N

101a

101

DIVIDED STREAM D1

10 PICTURES

| I1 | B0 | P3 | B2 | P5 | B4 | P7 | B6 | P9 | B8 | P11 | B10 | P13 | B12 |

103

| I7 | P9 | P11 | B10 | P13 | B12 |

6 PICTURES

104

I7  P9 :PICTURES I7 AND P9 ARE DECODED BUT NOT DISPLAYED

EP 1 725 049 A1

Fig. 4

START DIVIDING GOP

ST1
S[i]:PICTURE NUMBER IN GOP, m:GOP SIZE, n:MAXIMUM SIZE OF DIVIDED GOP

ST2
m > n ? — NO

YES

ST3
SUBSTITUTE REMAINDER OF (m−n) ÷ (n−2) INTO b

ST4
a > 0 ? — NO

YES

A1

ST5
i (i=0, 1, ⋯ ((n+((n−2) × (a−1)))−1)) ? — NO

YES

ST6
NO ← S[i]=CORE PICTURE?

YES

ST7
TRANSFER PICTURE(S[i]) TO CODING BUFFER 8

ST8
DECODE OLD CORE PICTURE STORED IN CODING BUFFER 8
AND TRANSFER DECODED PICTURE IN DECODING BUFFER 10

A2

ST9
OLD CORE PICTURE IN CODING BUFFER 8≠I PICTURE — NO

YES

ST10
RECODE PICTURE TO I PICTURE AND STORE I PICTURE TO CODING BUFFER 8

ST11
TRANSFER OLD CORE PICTURE IN CODING BUFFER 8
TO CODING BUFFER 3 AS PICTURE NOT TO BE DISPLAYED

ST12
TRANSFER NEW CORE PICTURE IN CODING BUFFER 8 TO CODING BUFFER 3

A3

ST13
IS DECODING REPEATED b TIMES
WHILE INCREMENTING i BY 1? — YES

NO

ST14
TRANSFER PICTURE(S[i]) TO CODING BUFFER 3

ST15
SET LAST CORE PICTURE NOT TO BE DISPLAYED

ST16
b=(n−2)

ST19
b=n

ST20
b=m

A4

ST17
i (i=0, 1, ⋯ (b−1)) ? — NO

YES

ST18
TRANSFER PICTURE(S[i]) TO CODING BUFFER 3

END DIVIDING GOP

Fig. 5

Fig. 6

Fig. 7

120

LARGE CAPACITY STORAGE — 1

STREAM ANALYZING UNIT — 2

CODING BUFFER (FOR 2 PICTURES) — 8

PICTURE INSERTING UNIT — 7

CODING BUFFER — 3

DECODING UNIT — 4

DECODING BUFFER — 5

DISPLAY UNIT — 6

Fig. 8

EP 1 725 049 A1

STREAM S3

| 14 PICTURES | | | | | | | | | | | | | |
|---|---|---|---|---|---|---|---|---|---|---|---|---|---|
| I1 | P13 | B0 | B2 | B3 | B4 | B5 | B6 | B7 | B8 | B9 | B10 | B11 | B12 |
| i=0 | 1 | 2 | 3 | 4 | 5 | 6 | 7 | 8 | 9 | 10 | 11 | 12 | 13 |

105

106

DIVIDED STREAM D3

| 10 PICTURES | | | | | | | | | |
|---|---|---|---|---|---|---|---|---|---|
| I1 | P13 | B0 | B2 | B3 | B4 | B5 | B6 | B7 | B8 |

| I1 | P13 | B9 | B10 | B11 | B12 |
|---|---|---|---|---|---|

6 PICTURES

107

I1 P13 : PICTURES I1 AND P13 ARE DECODED BUT NOT DISPLAYED

Fig. 9

Fig. 10

EP 1 725 049 A1

101

14 PICTURES

STREAM S1

| I1 | B0 | P3 | B2 | P5 | B4 | P7 | B6 | P9 | B8 | P11 | B10 | P13 | B12 |

i=0  1  2  3  4  5  6  7  8  9  10  11  12  13

103

10 PICTURES

DIVIDED STREAM D1

| I1 | B0 | P3 | B2 | P5 | B4 | P7 | B6 | P9 | B8 | P11 | B10 | P13 | B12 |

| F7 | P9 | P11 | B10 | P13 | B12 |

6 PICTURES

114

F7 :F7 IS FLAG

P9 :PICTURE P9 IS DECODED BUT NOT DISPLAYED

Fig. 11

EP 1 725 049 A1

121

122
CORE PICTURE USED FOR DECODING
123

| | CLOSED GOP | | | | | | | | OPEN GOP | | | | | | |

STREAM S4

| I1 | P3 | B2 | P5 | B4 | P7 | B6 | P8 | I10 | B9 | P12 | B11 | P14 | B13 | P16 | B15 |
|----|----|----|----|----|----|----|----|-----|-----|-----|-----|-----|-----|-----|-----|
| i=0 | 1 | 2 | 3 | 4 | 5 | 6 | 7 | 8 | 9 | 10 | 11 | 12 | 13 | 14 | 15 |

124

DIVIDED STREAM D4

| I1 | P3 | B2 | P5 | B4 | P7 | B6 | P8 |
|----|----|----|----|----|----|----|----|

CORE PICTURE USED FOR DECODING

125

RECODING

| I7 | P8 | I10 | B9 | P12 | B11 | P14 | B13 | P16 | B15 |
|----|----|-----|-----|-----|-----|-----|-----|-----|-----|

CLOSED GOP

I7  P8 : PICTURES I7 AND P8 ARE DECODED BUT NOT DISPLAYED

F i g. 12

RELATED ART

Fig. 13

EP 1 725 049 A1

200

LARGE CAPACITY
STORAGE

201

STREAM
ANALYZING
UNIT

202

CODING BUFFER

203

DECODING
UNIT

204

DECODING
BUFFER

205

DISPLAY UNIT

206

RELATED ART

Fig. 14

**European Patent Office**

**EUROPEAN SEARCH REPORT**

Application Number

EP 06 11 3859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MING-SYAN CHEN ET AL: "Downloading and stream conversion: supporting interactive playout of videos in a client station" PROCEEDINGS OF THE INTERNATIONAL CONFERENCE ON MULTIMEDIA COMPUTING AND SYSTEMS. WASHINGTON, MAY 15 - 18, 1995, LOS ALAMITOS, IEEE COMP. SOC. PRESS, US, 15 May 1995 (1995-05-15), pages 73-80, XP010154583 ISBN: 0-8186-7105-X * abstract * | 1-5,7, 11-16,18 | INV. H04N7/50 |
| A | * page 76, left-hand column, paragraph 2 - page 77, left-hand column, last line * ----- | 9,10,19 | |
| A | US 6 879 770 B1 (VAN ASTEN PETRUS JACOBUS HUBERTUS JOHANNES ET AL) 12 April 2005 (2005-04-12) * abstract * * column 3, line 38 - column 5, line 40 * ----- | 1-19 | |
| A | US 5 974 224 A (NAGATA ET AL) 26 October 1999 (1999-10-26) * abstract * * column 7, line 9 - column 10, line 56 * ----- | 1-19 | **TECHNICAL FIELDS SEARCHED (IPC)** H04N |
| P,X | EP 1 633 128 A (DEUTSCHE THOMSON-BRANDT GMBH) 8 March 2006 (2006-03-08) * abstract * * paragraph [0031] - paragraph [0035] * ----- | 1,6,14, 15,17 | |

The present search report has been drawn up for all claims

| Place of search | Date of completion of the search | Examiner |
|---|---|---|
| Berlin | 26 September 2006 | KONTOPODIS, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 3859

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2006

| Patent document cited in search report | | Publication date | Patent family member(s) | | Publication date |
|---|---|---|---|---|---|
| US 6879770 | B1 | 12-04-2005 | WO<br>JP | 0137572 A1<br>2003515290 T | 25-05-2001<br>22-04-2003 |
| US 5974224 | A | 26-10-1999 | JP | 10013791 A | 16-01-1998 |
| EP 1633128 | A | 08-03-2006 | CN<br>JP<br>US | 1744716 A<br>2006074794 A<br>2006045491 A1 | 08-03-2006<br>16-03-2006<br>02-03-2006 |

For more details about this annex : see Official Journal of the European Patent Office, No. 12/82

**EP 1 725 049 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003515290 A